# EUROPÄISCHE PATENTSCHRIFT

(11) **EP 3 820 591 B1**
(45) Veröffentlichungstag und Bekanntmachung des Hinweises auf die Patenterteilung: **09.10.2024**
(21) Anmeldenummer: 19733736.3
(22) Anmeldetag: 24.06.2019
(51) Int. Cl.: B01D 46/64, F02M 35/02, B01D 46/00, B01D 46/24, F02M 35/024

(54) **SEKUNDÄRFILTERELEMENT UND FILTERANORDNUNG**
SECONDARY FILTER ELEMENT AND FILTER ARRANGEMENT
ÉLÉMENT FILTRANT SECONDAIRE ET DISPOSITIF DE FILTRAGE

(30) Priorität: 09.07.2018 DE 102018116506
(43) Veröffentlichungstag der Anmeldung: 19.05.2021
(73) Patentinhaber: MANN+HUMMEL GmbH, 71636 Ludwigsburg (DE)
(72) Erfinder: STARK, Dennis, 69256 Mauer (DE); KAUFMANN, Michael, 67149 Meckenheim (DE); RUHLAND, Klaus-Dieter, 67149 Meckenheim (DE)
(74) Vertreter: Mann + Hummel Intellectual Property
(86) Internationale Anmeldenummer: PCT/EP2019/066684
(87) Internationale Veröffentlichungsnummer: WO 2020/011520

(56) Entgegenhaltungen:
- EP-A1- 3 085 428
- WO-A1-2017/190874
- WO-A1-2019/113152
- DE-A1- 102016 004 317
- US-A1- 2006 086 075

## Beschreibung

### Technisches Gebiet

Die vorliegende Erfindung betrifft ein Sekundärfilterelement für eine Filteranordnung und eine Filteranordnung mit einem derartigen Sekundärfilterelement.

### Stand der Technik

Bekannte Luftfilteranordnungen für Fahrzeuge, insbesondere im Bereich landwirtschaftlicher Nutzfahrzeuge und Baufahrzeuge, können ein in einer Filteraufnahme aufgenommenes Hauptfilterelement und ein in dem Hauptfilterelement aufgenommenes Sekundärfilterelement umfassen. Ein derartiges Sekundärfilterelement dient insbesondere als Sicherheit für die Fälle, in denen ein Bediener bei laufender Brennkraftmaschine die Filteraufnahme öffnet und das Hauptfilterelement entnimmt, beispielsweise zum Entstauben oder Wechseln desselben. Das Sekundärfilterelement verhindert, dass die Brennkraftmaschine bei entnommenen Hauptfilterelement Partikel, wie beispielsweise Staub oder Sand, ansaugt.

EP 3 085 428 A1 beschreibt eine Filteranordnung mit einem Hauptfilterelement und einem in dem Hauptfilterelement aufgenommenen Sekundärfilterelement. Das Hauptfilterelement weist in seiner Längsrichtung einen ovalen Querschnitt auf und umfasst eine umlaufende Dichteinrichtung zum Abdichten des Hauptfilterelements gegenüber einer Filteraufnahme. Das Sekundärfilterelement umfasst ebenfalls einen ovalen Querschnitt mit einer umlaufenden Dichteinrichtung. US2006/086075 A1, DE102016004317A1 und WO2017/190874 A1 beschreiben weitere Filteranordnungen.

### Offenbarung der Erfindung

Vor diesem Hintergrund liegt der vorliegenden Erfindung die Aufgabe zugrunde, ein verbessertes Filterelement anzugeben.

Demgemäß wird ein Sekundärfilterelement für eine Filteranordnung gemäß der Erfindung in Anspruch 1 definiert.

Das Filterelement umfasst ein Filtermedium und eine umlaufende Dichteinrichtung zum Abdichten des Filterelements gegenüber einer Filteraufnahme für das Filterelement, wobei die Dichteinrichtung eine ovale Geometrie mit einer Langseite und einer Kurzseite aufweist, und wobei eine Außenfläche der Dichteinrichtung entlang der Kurzseite betrachtet radial weiter über das Filtermedium hinausragt als entlang der Langseite betrachtet.

Das Filterelement ist vorzugweise ein Luftfilterelement zum Filtern von Ansaugluft für eine Brennkraftmaschine. Vorzugsweise findet das Filterelement in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung. Das Filterelement ist bevorzugt ein Nebenfilterelement, Nebenelement, Sekundärfilterelement oder Sekundärelement der Filteranordnung oder kann als solches bezeichnet werden. Die Filteranordnung weist des Weiteren bevorzugt ein Hauptfilterelement, Hauptelement, Primärfilterelement oder Primärelement auf, in dem das Sekundärfilterelement aufgenommen ist. Das Hauptfilterelement kann auch als erstes Filterelement der Filteranordnung, und das Sekundärfilterelement kann auch als zweites Filterelement der Filteranordnung bezeichnet werden.

Das Filterelement umfasst bevorzugt ein Filtermedium in Form eines Filterpapiers, eines Filtergewebes, Filtergeleges oder Filtervlieses. Insbesondere kann das Filtermedium in einem Spinnvlies- oder Meltblown-Verfahren hergestellt sein oder eine derartige, auf einem Vlies- oder Celluloseträger aufgebrachte Faserlage umfassen. Weiter kann das Filtermedium verfilzt oder vernadelt sein. Das Filtermedium kann Naturfasern, wie Cellulose oder Baumwolle, oder Kunstfasern, beispielsweise aus Polyester, Polyvinylsulfit oder Polytetrafluorethylen, aufweisen. Das Filtermedium ist bevorzugt nicht gefaltet, sondern glatt.

Die Dichteinrichtung ist vorzugsweise federelastisch verformbar. Die Dichteinrichtung läuft vollständig um das Filterelement um und umfasst neben der Außenfläche eine der Außenfläche abgewandte Innenfläche. Mit Hilfe der Innenfläche kann das Filtermedium radial gegenüber einer Dichtungsanlagefläche eines Eingriffsbereichs der Filteraufnahme abgedichtet sein. Unter "radial" ist vorliegend eine Richtung zu verstehen, die weg von einer Mittelachse des Filterelements orientiert ist. Das heißt, das Filterelement umfasst eine Radialrichtung, die senkrecht zu der Mittelachse und von dieser weg orientiert ist. Die Mittelachse verläuft dabei insbesondere parallel zu einer Längsrichtung des Filterelements.

Die Mittelachse verläuft durch einen Schnittpunkt der Langseite und der Kurzseite hindurch.

Die Dichteinrichtung weist insbesondere in Längsrichtung betrachtet eine ovale Geometrie bzw. einen ovalen Querschnitt auf. Unter "oval" kann vorliegend eine Geometrie oder Form mit nicht konkaver, glatter Außenkontur zu verstehen sein. Insbesondere kann diese Geometrie durchgehend aus konvexen und geraden Abschnitten, bevorzugt ausschließlich aus konvexen Abschnitten, gebildet sein. Insbesondere kann unter "oval" beispielsweise auch ein rechteckiger Querschnitt mit verrundeten Ecken, ein elliptischer Querschnitt oder ein aus mehreren Kreisbögen gebildeter Querschnitt zu verstehen sein. Bevorzugt wird eine ovale Außenkontur oder ein ovaler Querschnitt verwendet, die oder der einen Mittelpunkt und zwei sich in diesem schneidende Symmetrieachsen aufweist. Die Symmetrieachsen umfassen insbesondere die Langseite und die Kurzseite. Die Symmetrieachsen können auch als Hauptachse und Nebenachse bezeichnet werden. Insbesondere entspricht die zuvor erwähnte Langseite der Hauptachse und die Kurzseite entspricht der Nebenachse. Die Langseite ist senkrecht zu der Kurzseite angeordnet und halbiert diese insbesondere. Umgekehrt halbiert auch die Kurzseite die Langseite. Darunter, dass die Außenfläche der Dichteinrichtung entlang der Kurzseite betrachtet radial weiter über das Filtermedium hinausragt als entlang der Langseite betrachtet, ist insbesondere zu verstehen, dass die Außenfläche in einer parallel zu der Kurzseite orientierten Richtung betrachtet weiter über das Filtermedium herausragt als in einer parallel zu der Langseite orientierten Richtung betrachtet.

Dadurch, dass die Außenfläche der Dichteinrichtung über das Filtermedium hinausragt, kann ein Abströmquerschnitt des Filterelements im Vergleich zu einem Filterelement ohne eine derart gestaltete Dichteinrichtung vergrößert werden, da die Dichteinrichtung diesen nicht einengt. Des Weiteren kann ein Krümmungsradius der Dichteinrichtung optimiert werden, wodurch eine verbesserte, insbesondere radiale, Abdichtung gegenüber der Filteraufnahme erreicht werden kann.

In Ausführungsformen umfasst das Filterelement ferner ein Mittelrohr zum Abstützen des Filtermediums, wobei die Dichteinrichtung mit dem Mittelrohr verbunden ist, und wobei eine von einer Innenfläche der Dichteinrichtung begrenzte erste Querschnittsfläche des Filterelements größer ist als eine von einer Innenkontur des Mittelrohrs begrenzte zweite Querschnittsfläche des Filterelements. Die zweite Querschnittsfläche kann auch als Abströmfläche oder Abströmquerschnitt des Filterelements bezeichnet werden. Dadurch, dass die erste Querschnittsfläche größer als die zweite Querschnittsfläche ist, engt die Dichteinrichtung den Abströmquerschnitt des Filterelements nicht ein.

In Ausführungsformen ragt die Innenfläche der Dichteinrichtung entlang der Kurzseite betrachtet radial weiter über die Innenkontur des Mittelrohrs hinaus als entlang der Langseite betrachtet. Insbesondere ragt die Innenfläche sowohl entlang der Kurzseite betrachtet als auch entlang der Langseite betrachtet radial über die Innenkontur des Mittelrohrs hinaus, wobei die Innenfläche jedoch entlang der Kurzseite betrachtet weiter hinausragt. Hierdurch wird eine Einengung des Abströmquerschnitts des Filterelements vermieden.

In Ausführungsformen weist das Mittelrohr einen Abstützabschnitt zum Abstützen des Filtermediums, einen Dichtabschnitt, mit dem die Dichteinrichtung verbunden ist, und einen zwischen dem Abstützabschnitt und dem Dichtabschnitt angeordneten Verbindungsabschnitt auf, der sich ausgehend von dem Dichtabschnitt in Richtung des Abstützabschnitts konisch verjüngt. Der Stützabschnitt ist vorzugsweise gitterförmig und nicht fluiddurchlässig. Beispielsweise kann das Filtermedium auf den Abstützabschnitt aufgewickelt sein. Der Dichtabschnitt weist vorzugsweise eine ovale Geometrie auf und läuft vollständig um das Filterelement um. An den Dichtabschnitt kann die Dichteinrichtung beispielsweise angegossen sein. Die Dichteinrichtung kann beispielsweise aus einem Polyurethanschaum gefertigt sein. Der Verbindungsabschnitt verbindet den Abstützabschnitt mit dem Dichtabschnitt einstückig, insbesondere materialeinstückig. Das Mittelrohr ist bevorzugt ein Kunststoffspritzgussbauteil.

In Ausführungsformen weist die Dichteinrichtung zwei einander gegenüberliegende erste Krümmungsabschnitte und zwei einander gegenüberliegende zweite Krümmungsabschnitte auf, wobei ein Krümmungsradius der zweiten Krümmungsabschnitte größer als ein Krümmungsradius der ersten Krümmungsabschnitte ist. Der Krümmungsradius der zweiten Krümmungsabschnitte kann gegen unendlich gehen. Das heißt, der Krümmungsradius der zweiten Krümmungsabschnitte kann auch zumindest annähernd gerade ausgeführt sein. Insbesondere sind die Krümmungsabschnitte einteilig, insbesondere materialeinstückig, miteinander verbunden. Bevorzugt sind die ersten Krümmungsabschnitte spiegelsymmetrisch zu der Kurzseite positioniert, und die zweiten Krümmungsabschnitte sind bevorzugt spiegelsymmetrisch zu der Langseite positioniert.

In einer besonders bevorzugten Ausführungsform weist die Dichteinrichtung eine im Wesentlichen stadionartige Geometrie auf. Es hat sich als vorteilhaft erwiesen, dass die Dichteinrichtung insbesondere keine geraden Abschnitte, sondern nur gekrümmte Abschnitte aufweist. Dadurch, dass die Dichteinrichtung im Wesentlichen ausschließlich gekrümmte Abschnitte aufweist, kann über deren gesamten Umfang ein konstanter Anpressdruck gegen den Eingriffsbereich der Filteraufnahme erreicht werden. Die Dichteinrichtung ist vorzugsweise dazu eingerichtet, das Filterelement bezüglich der Filteraufnahme radial nach innen abzudichten. Stärkere Krümmungen bzw. kleinere Radien an der Dichteinrichtung sind bei radialer Abdichtung nach innen oder außen vorteilhafter als schwächere Krümmungen bzw. größere Radien, da mit zunehmender Krümmung die Gefahr abnimmt, dass die Dichteinrichtung bei Vibrationsbelastung den Kontakt zu der filteraufnahmeseitigen Dichtungsanlagefläche verliert. Die Dichteinrichtung kann alternativ oder zusätzlich auch dazu eingerichtet sein, das Filterelement bezüglich der Filteraufnahme axial abzudichten. Unter "axial" ist vorliegend eine axial auf einen Fluidauslass der Filteraufnahme zu orientierte Richtung zu verstehen.

In Ausführungsformen sind die ersten Krümmungsabschnitte der Langseite zugeordnet, wobei die zweiten Krümmungsabschnitte der Kurzseite zugeordnet sind, und wobei die zweiten Krümmungsabschnitte entlang der Kurzseite betrachtet radial weiter über das Filtermedium hinausragen als die ersten Krümmungsabschnitte entlang der Langseite betrachtet. Darunter, dass die ersten Krümmungsabschnitte der Langseite zugeordnet sind, ist insbesondere zu versehen, dass Krümmungsmittelpunkte der ersten Krümmungsabschnitte auf der Langseite angeordnet sind. Dementsprechend sind Krümmungsmittelpunkte der zweiten Krümmungsabschnitte insbesondere auf der Kurzseite positioniert.

Ferner wird eine Filteranordnung mit einer Filteraufnahme, einem in der Filteraufnahme aufgenommenen Filterelement, insbesondere einem Hauptfilterelement, das ein Filtermedium und eine umlaufende Dichteinrichtung zum Abdichten des Filterelements gegenüber der Filteraufnahme aufweist, und einem in dem Filterelement aufgenommenen weiteren Filterelement, insbesondere einem Sekundärfilterelement, das eine Dichteinrichtung zum Abdichten des weiteren Filterelements gegenüber der Filteraufnahme aufweist, wobei die Dichteinrichtung des weiteren Filterelements radial über den Innenraum des Filterelementes hinausragt, der durch innere Mantelfläche des Filtermediums oder ein Mittelrohr des Filterelements begrenzt wird. Dies bedeutet, dass die Dichteinrichtung radial mindestens über die Innenseite der offenen Endscheibe (d.h. die durch die offene Endscheibe begrenzte Öffnung) und bevorzugt mindestens über ein Mittelrohr des Filterelements hinausragt, sofern dies vorhanden ist und über die innere Mantelfläche des Filtermediums des Filterelements hinausragt, wenn kein Mittelrohr vorhanden ist. Selbstverständlich kann die Dichteinrichtung auch zusätzlich radial über die innere Mantelfläche des Filtermediums hinausragen, wenn das Filterelement ein Mittelrohr aufweist. Das Hauptfilterelement kann auch als erstes Filterelement und das Sekundärfilterelement kann auch als zweites Filterelement bezeichnet werden. Insbesondere ist das Sekundärfilterelement in dem Hauptfilterelement aufgenommen. Nachfolgend wird das Hauptfilterelement als Filterelement und das Sekundärfilterelement als weiteres Filterelement bezeichnet. Dadurch, dass die Dichteinrichtung des weiteren Filterelements radial über das Filtermedium des Filterelements hinausragt, wird ein Abströmquerschnitt des Filterelements vorteilhafterweise von der Dichteinrichtung des weiteren Filterelements nicht eingeengt. Darunter, dass die Dichteinrichtung des weiteren Filterelements radial über den Innenraum des Filterelements hinausragt, ist insbesondere zu verstehen, dass die Dichteinrichtung über eine innere Mantelfläche des Filtermediums und/oder ein Mittelrohr des Filterelements (sofern vorhanden) hinausragt. Über eine äußere Mantelfläche des Filtermediums des Filterelements ragt die Dichteinrichtung bevorzugt nicht hinaus.

In Ausführungsformen weist die Dichteinrichtung des weiteren Filterelements eine ovale Geometrie mit einer Langseite und einer Kurzseite auf, wobei eine Außenfläche der Dichteinrichtung des weiteren Filterelements entlang der Kurzseite betrachtet radial weiter über das Filtermedium des Hauptfilterelements hinausragt als entlang der Langseite betrachtet. Das heißt insbesondere, dass die Dichteinrichtung des weiteren Filterelements zumindest teilweise mit der Dichteinrichtung des Hauptfilterelements überlappt.

In Ausführungsformen ist die Dichteinrichtung des weiteren Filterelements vollständig außerhalb des Filtermediums des Hauptfilterelements angeordnet. Insbesondere ist in einer Längsrichtung der Filteraufnahme betrachtet die Dichteinrichtung des weiteren Filterelements neben dem Filtermedium des Filterelements positioniert.

In Ausführungsformen dichten die Dichteinrichtung des Filterelements und die Dichteinrichtung des weiteren Filterelements radial gegenüber der Filteraufnahme ab, wobei die Dichteinrichtung des weiteren Filterelements zumindest abschnittsweise innerhalb der Dichteinrichtung des Filterelements angeordnet ist. Insbesondere umläuft die Dichteinrichtung des Filterelements die Dichteinrichtung des weiteren Filterelements vollständig. Dies bedeutet, dass in Axialrichtung gesehen die Dichteinrichtung des weiteren Filterelements zumindest abschnittsweise auf gleicher Höhe wie die Dichteinrichtung des Filterelements angeordnet ist.

In Ausführungsformen verlaufen die Dichteinrichtung des Hauptfilterelements und die Dichteinrichtung des Sekundärfilterelements parallel zueinander. Bevorzugt sind es dabei die Dichtflächen, d.h. bei einer Ausführung als Radialdichtung regelmäßig die Innenflächen, die zueinander parallel verlaufend angeordnet sind. Parallel verlaufend ist hierbei so zu verstehen, dass entlang einer Mittelachse gesehen die ringförmigen Verläufe der Dichteinrichtungen bzw. Dichtflächen parallel zueinander um die Mittelachse umlaufen.

### Kurze Beschreibung der Zeichnungen

Es zeigt dabei:
- Fig. 1:: eine schematische perspektivische Ansicht einer Ausführungsform einer Filteranordnung;
- Fig. 2:: eine schematische Vorderansicht der Filteranordnung gemäß Fig. 1;
- Fig. 3:: eine schematische Seitenansicht der Filteranordnung gemäß Fig. 1;
- Fig. 4:: eine weitere schematische Seitenansicht der Filteranordnung gemäß Fig. 1;
- Fig. 5:: eine schematische Schnittansicht der Filteranordnung gemäß der Schnittlinie V-V der Fig. 4;
- Fig. 6:: eine weitere schematische Schnittansicht der Filteranordnung gemäß der Schnittlinie VI-VI der Fig. 4;
- Fig. 7:: eine weitere schematische Schnittansicht der Filteranordnung gemäß der Schnittlinie VII-VII der Fig. 4;
- Fig. 8:: die Detailansicht IIX gemäß Fig. 7;
- Fig. 9:: eine schematische Teilschnittansicht der Filteranordnung gemäß Fig. 1;
- Fig. 10:: eine schematische perspektivische Ansicht einer Ausführungsform eines Filterelements für die Filteranordnung gemäß Fig. 1;
- Fig. 11:: eine schematische Schnittansicht des Filterelements gemäß Fig. 10;
- Fig. 12:: eine schematische Vorderansicht des Filterelements gemäß Fig. 10;
- Fig. 13:: eine schematische Vorderansicht einer Ausführungsform eines weiteren Filterelements für die Filteranordnung gemäß Fig. 1;
- Fig. 14:: eine weitere schematische Vorderansicht des Filterelements gemäß Fig. 13;
- Fig. 15:: eine weitere schematische Vorderansicht des Filterelements gemäß Fig. 13;
- Fig. 16:: eine schematische Schnittansicht des Filterelements gemäß der Schnittlinie XVI-XVI der Fig. 13; und
- Fig. 17:: eine weitere schematische Schnittansicht des Filterelements gemäß der Schnittlinie XVII-XVII der Fig. 13.

In den Figuren sind gleiche oder funktionsgleiche Elemente, sofern nichts anderes angegeben ist, mit denselben Bezugszeichen versehen worden.

### Ausführungsformen der Erfindung

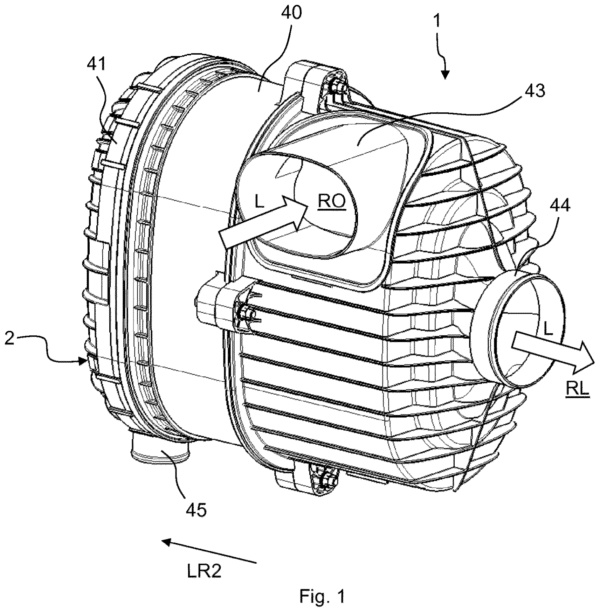

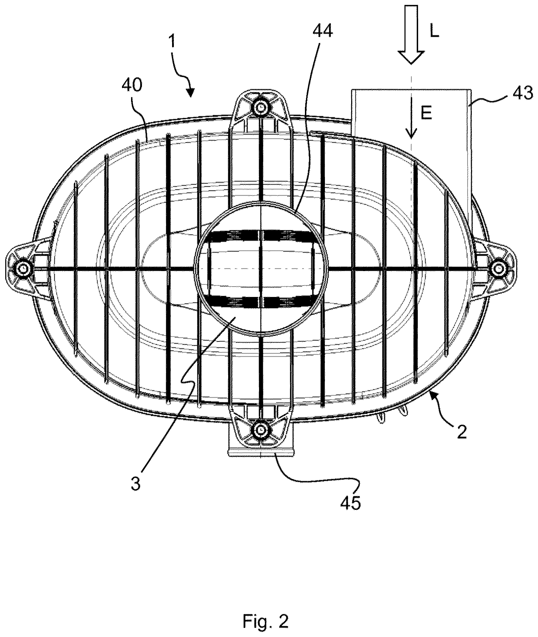

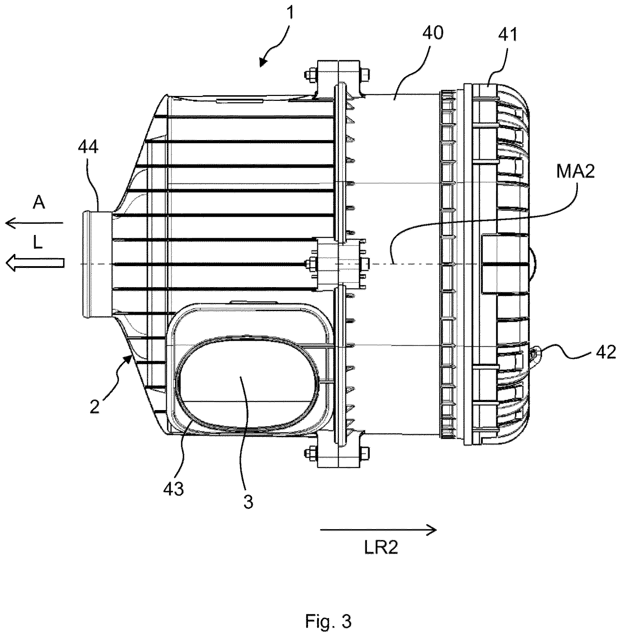

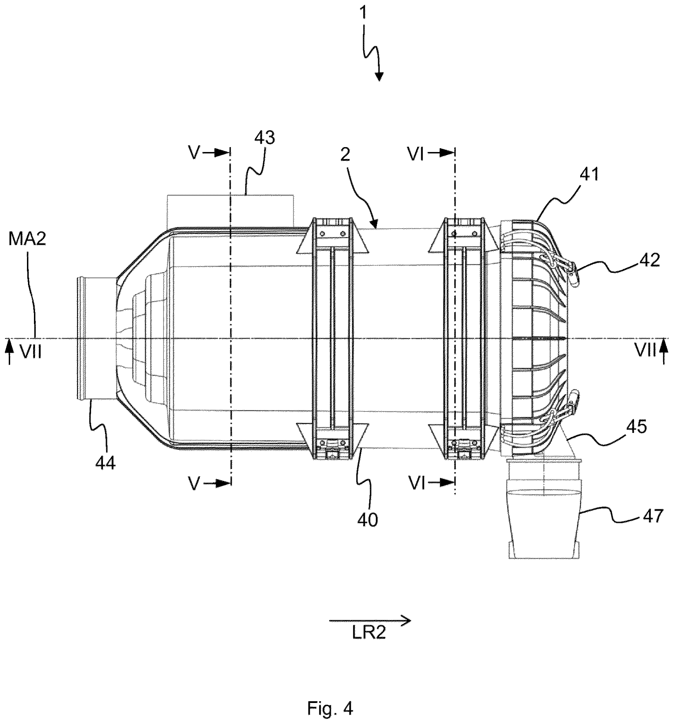

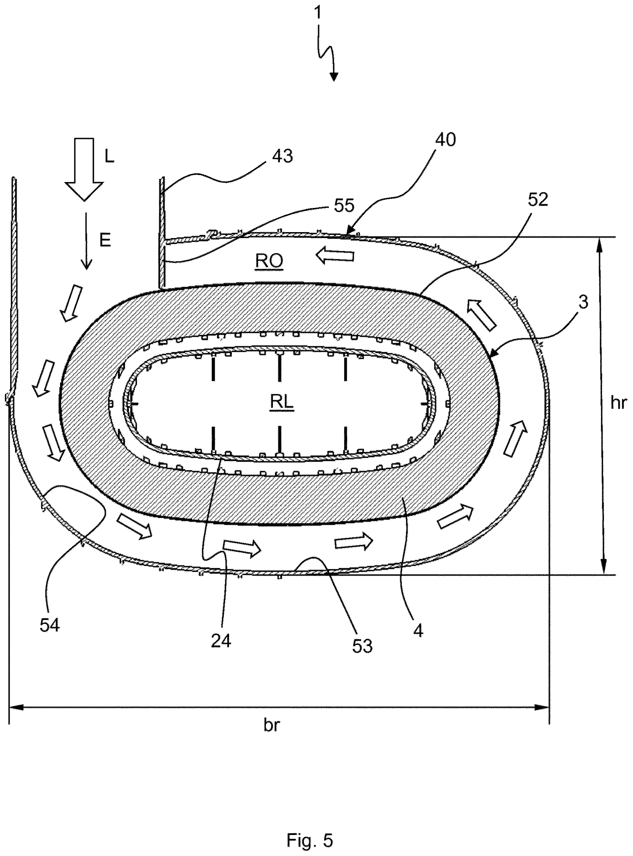

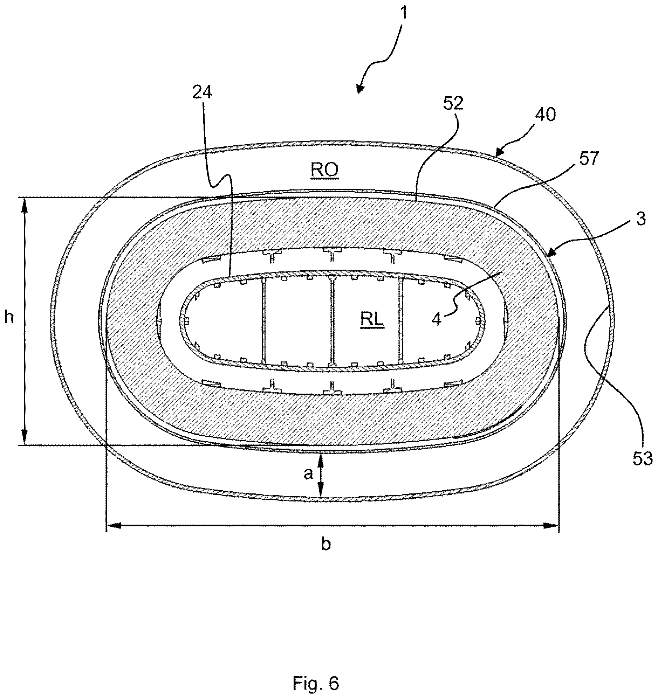

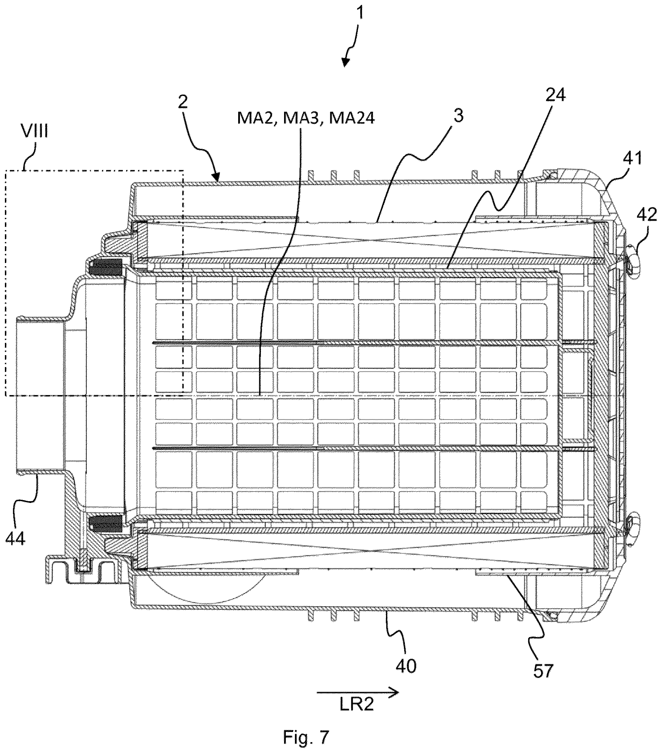

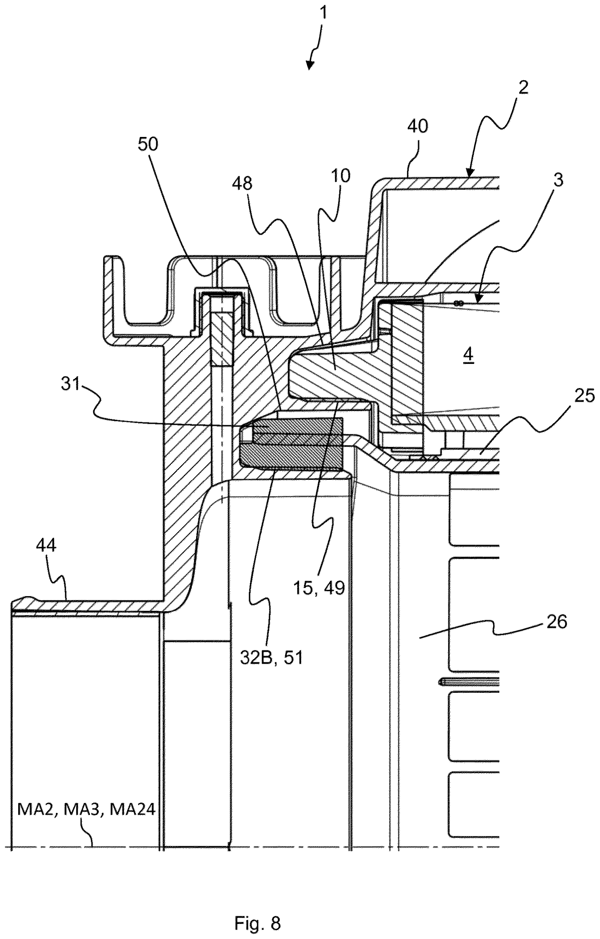

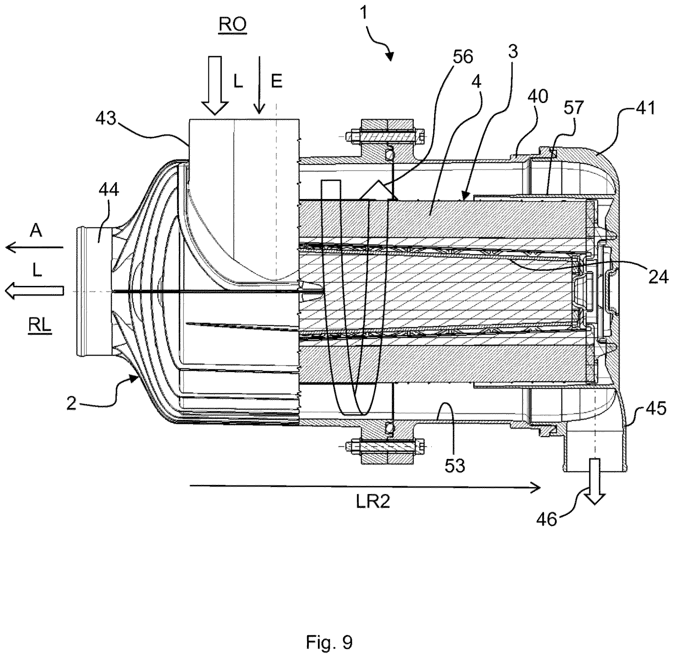

Fig. 1 zeigt eine schematische perspektivische Ansicht einer Ausführungsform einer Filteranordnung 1. Fig. 2 zeigt eine Vorderansicht der Filteranordnung 1. Fig. 3 und 4 zeigen jeweils eine Seitenansicht der Filteranordnung 1. Fig. 5 bzw. 6 zeigen jeweils Schnittansichten der Filteranordnung 1 gemäß der Schnittlinie V-V bzw. VI-VI der Fig. 4, und Fig. 7 zeigt eine weitere Schnittansicht der Filteranordnung 1 gemäß der Schnittlinie VII-VII der Fig. 4. Fig. 8 zeigt die Detailansicht IIX gemäß Fig. 7, und Fig. 9 zeigt eine schematische Teilschnittansicht der Filteranordnung 1. Nachfolgend wird auf Fig. 1 bis 9 gleichzeitig Bezug genommen.

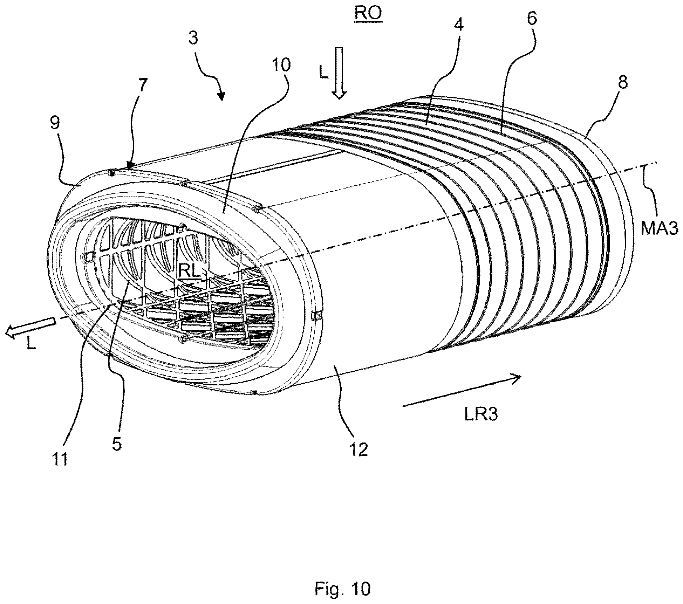

Die Filteranordnung 1 kann auch als Filtersystem bezeichnet werden. Die Filteranordnung 1 umfasst eine Filteraufnahme 2 und ein in der Filteraufnahme 2 angeordnetes Filterelement 3. Die Filteraufnahme 2 kann auch als Gehäuse oder Filtergehäuse bezeichnet werden. Das Filterelement 3 ist in Fig. 10 in einer schematischen perspektivischen Ansicht gezeigt. Die Filteranordnung 1 findet vorzugsweise als Ansaugluftfilter für Brennkraftmaschinen, beispielsweise in Kraftfahrzeugen, Lastkraftwagen, Baufahrzeugen, Wasserfahrzeugen, Schienenfahrzeugen, landwirtschaftlichen Maschinen bzw. Fahrzeugen oder Luftfahrzeugen Anwendung. Die Filteranordnung 1 kann auch bei immobilen Anwendungen, beispielsweise in der Gebäudetechnik, Anwendung finden. Das Filterelement 3 ist insbesondere dazu geeignet, Verbrennungsluft einer Brennkraftmaschine zu filtern. Vorzugsweise ist das Filterelement 3 ein Luftfilterelement.

Das in Fig. 10 bis 12 gezeigte Filterelement 3 ist ein Hauptfilterelement, Hauptelement, Primärfilterelement oder Primärelement oder kann als solches bezeichnet werden. Ferner kann das Filterelement 3 auch als erstes Filterelement der Filteranordnung 1 bezeichnet werden. Das Filterelement 3 umfasst ein Filtermedium 4, das ein Mittelrohr 5 umgibt und bevorzugt an diesem derart anliegt, dass das Mittelrohr 5 eine Stützfunktion für das Filtermedium 4 bei Durchströmung desselben wahrnehmen kann. Das Filtermedium 4 kann auch als Filterkörper bezeichnet werden. Das Mittelrohr 5 kann auch als Stützrohr bezeichnet werden. Das Mittelrohr 5 ist vorzugsweise gitterförmig und damit fluiddurchlässig.

Beispielsweise kann das Filtermedium 4 als Wickel aus einem Filtermaterial auf das Mittelrohr 5 aufgewickelt sein oder an diesem ringförmig geschlossen, beispielsweise in Form eines sternförmig gefalteten Balges, anliegen. Das Filtermedium 4 ist vorzugsweise gefaltet. Das gefaltete Filtermedium 4 kann zur Stabilisierung mit einem Fixierwickel 6, das heißt, mit einem in Schmelzklebstoff oder einem anderen Klebstoff getränkten Band oder Faden, umwickelt oder mittels kreisförmig oder spiralförmig umlaufender Klebstoffraupen fixiert sein. Der Fixierwickel 6 kann auch als Fadenwickel bezeichnet werden.

Das Filtermedium 4 ist beispielsweise ein Filterpapier, ein Filtergewebe, Filtergelege oder Filtervlies. Insbesondere kann das Filtermedium 4 in einem Spinnvlies- oder Meltblown-Verfahren hergestellt sein oder eine derartige, auf einem Vlies- oder Celluloseträger aufgebrachte Faserlage umfassen. Weiter kann das Filtermedium 4 verfilzt oder vernadelt sein. Das Filtermedium 4 kann Naturfasern, wie Cellulose oder Baumwolle, oder Kunstfasern, beispielsweise aus Polyester, Polyvinylsulfit oder Polytetrafluorethylen, aufweisen. Fasern des Filtermediums 4 können bei der Verarbeitung in, schräg und/oder quer oder ungeordnet zu einer Maschinenrichtung orientiert sein.

Das Filterelement 3 weist eine erste, insbesondere offene, Endscheibe 7 und eine zweite, insbesondere geschlossene, Endscheibe 8 auf. Die Endscheiben 7, 8 sind vorzugsweise aus einem Kunststoffmaterial gefertigt. Beispielsweise können die Endscheiben 7, 8 als kostengünstige Kunststoffspritzgussbauteile ausgebildet sein. Die Endscheiben 7, 8 können beispielsweise auch aus einem insbesondere in Gießschalen gegossenen, bevorzugt geschäumten, Polyurethanmaterial gefertigt sein. Die Endscheiben 7, 8 können an das Filtermedium 4 angegossen sein. Das Filtermedium 4 ist zwischen den Endscheiben 7, 8 angeordnet. Das Filtermedium 4 kann mit den Endscheiben 7, 8 verschmolzen, verklebt oder verschweißt sein.

Auf einer dem Filtermedium 4 abgewandten Vorderseite 9 der ersten Endscheibe 7 ist eine Dichteinrichtung 10 zum Abdichten des Filterelements 3 gegenüber der Filteraufnahme 2 vorgesehen. Die Dichteinrichtung 10 ist dazu eingerichtet, das Filterelement 3, insbesondere radial, gegenüber der Filteraufnahme 2 abzudichten.

Die zweite Endscheibe 8 ist beispielsweie plattenförmig und bevorzugt fluidundurchlässig. In der ersten Endscheibe 7 ist eine Aufnahmeöffnung 11 vorgesehen, durch welche mit Hilfe des Filterelements 3 gefiltertes Fluid L austreten kann. Das Fluid L ist vorzugsweise Luft. Weiterhin weist das Filterelement 3 bevorzugt einen Anströmschutz 12 auf, der ein direktes Anströmen des Filtermediums 4 mit partikelbeladenem Fluid L verhindert. Der Anströmschutz 12 kann ein Folie oder ein engmaschiges Netz oder Gitter sein. Der Anströmschutz 12 kann fluidundurchlässig oder fluiddurchlässig sein. Der Anströmschutz 12 kann mit dem Filtermedium 4 verklebt, verschweißt oder verschmolzen sein. Der Anströmschutz 12 ist benachbart zu der ersten Endscheibe 7 angeordnet. Insbesondere grenzt der Anströmschutz 12 an die erste Endscheibe 7 an. Der Anströmschutz 12 kann mit der ersten Endscheibe 7 insbsondere strömungsdicht verbunden sein.

Zu reinigendes Fluid L tritt von einer Rohseite RO des Filterelements 3 durch das Filtermedium 4 hindurch zu einer von dem Mittelrohr 5 umgebenen Reinseite RL des Filterelements 3. Aus dem Filterelement 3 strömt das Fluid L durch die Aufnahmeöffnung 11 als gefiltertes Fluid L aus. Das Filterelement 3 und insbesondere das Filtermedium 4 weisen eine Breite b und eine Höhe h (Fig. 6) auf. Die Breite b ist größer als die Höhe h. Bevorzugt beträgt die Breite b das 2- bis 3-fache der Höhe h, weiter bevorzugt beträgt die Breite b das 1,5- bis 3-fache der Höhe h.

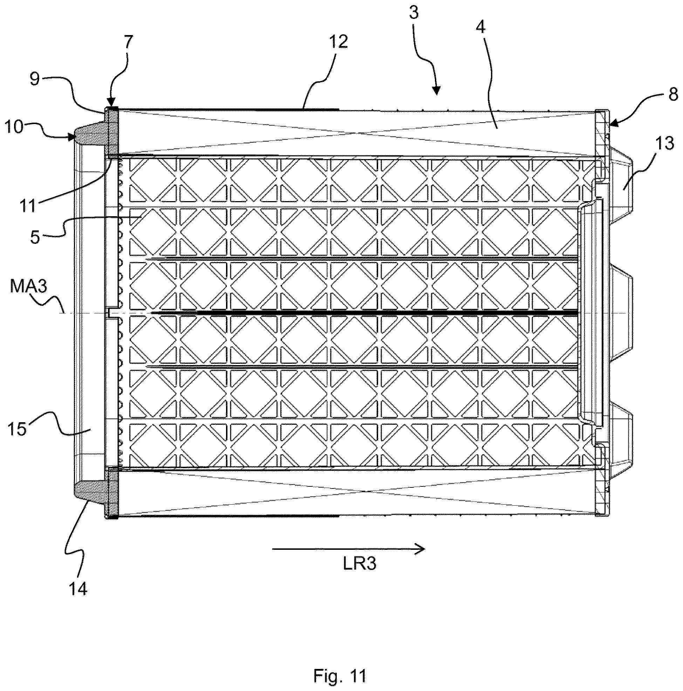

Das Filterelement 3 weist in einer Längsrichtung LR3 desselben betrachtet bevorzugt einen ovalen Querschnitt auf. Der Querschnitt kann sich ausgehend von der ersten Endscheibe 7 in Richtung der zweiten Endscheibe 8 verringern, so dass das Filterelement 3 konisch zuläuft. Bevorzugt jedoch weist das Filterelement 3, wie in Fig. 10 und 11 gezeigt, einen ovalen Querschnitt auf. D. h., das Filterelement 3 ist zylinderförmig mit einer ovalen Basisfläche.

Unter "oval" kann vorliegend eine Form mit nicht konkaver, glatter Außenkontur, das heißt, durchgehend aus konvexen und geraden Abschnitten, bevorzugt ausschließlich aus konvexen Abschnitten gebildet, beispielsweise ein rechteckiger Querschnitt mit verrundeten Ecken, ein elliptischer Querschnitt oder ein aus mehreren Kreisbögen gebildeter Querschnitt verstanden werden. Bevorzugt wird eine ovale Außenkontur oder ein ovaler Querschnitt verwendet, die oder der einen Mittelpunkt und zwei sich in diesem schneidende Symmetrieachsen aufweisen.

Die zweite Endscheibe 8 kann beispielsweise Verspannelemente 13 aufweisen, von denen in Fig. 11 lediglich eines mit einem Bezugszeichen versehen ist. Die Verspannelemente 13 können elastisch verformbare, in der Längsrichtung LR3 von der zweiten Endscheibe 8 abstehende Fortsätze ausgebildet sein, mit deren Hilfe das Filterelement 3 in der Filteraufnahme 2 elastisch verspannt werden kann. Die Anzahl der Verspannelemente 13 ist beliebig. Mit Hilfe der elastisch verformbaren Verspannelemente 13 kann das Filterelement in der Filteraufnahme 2 bezüglich der Längsrichtung LR3 optimal positioniert werden. Die Verspannelemente 13 dienen weiterhin der Schwingungsdämpfung und/oder dem Toleranzausgleich. Die zweite Endscheibe 8 ist vorzugsweise materialeinstückig mit den Verspannelementen 13 ausgebildet. Beispielsweise kann die zweite Endscheibe 8 mitsamt den Verspannelementen 13 aus einem Polyurethanschaum gebildet sein.

An der ersten Endscheibe 7 und insbesondere an der dem Filtermedium 4 abgewandten Vorderseite 9 der ersten Endscheibe 7 ist die elastisch verformbare Dichteinrichtung 10 zum Abdichten des Filterelements 3 gegenüber der Filteraufnahme 2 vorgesehen. Die Dichteinrichtung 10 ist federelastisch verformbar. Vorzugsweise sind die erste Endscheibe 7 und die Dichteinrichtung 10 materialeinstückig ausgeführt. Beispielsweise können die erste Endscheibe 7 und die Dichteinrichtung 10 aus einem Polyurethanschaum gefertigt sein. Die Dichteinrichtung 10 umläuft die erste Endscheibe 7 vollständig. Die Dichteinrichtung 10 befindet sich, insbesondere in der Längsrichtung LR3 projiziert, vollständig innerhalb eines Querschnitts des Filtermediums 4. Wie Fig. 11 weiterhin zeigt, umfasst die Dichteinrichtung 10 eine dem Mittelrohr 5 abgewandte umlaufende Außenfläche 14 sowie eine der Außenfläche 14 abgewandte Innenfläche 15, die ebenfalls vollständig um das Filterelement 3 umläuft. Die Dichteinrichtung 10 weist eine ovale Geometrie bzw. einen ovalen Querschnitt auf.

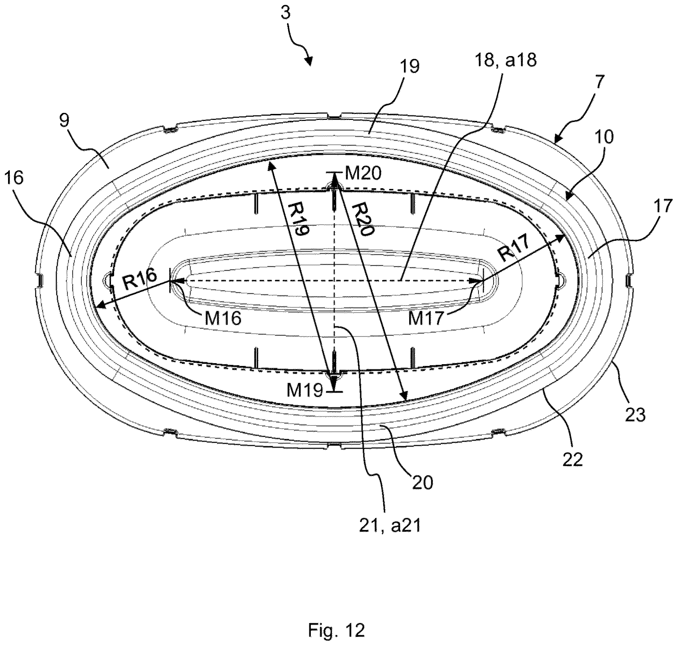

Die Dichteinrichtung weist, wie in Fig. 12 gezeigt, zwei einander gegenüberliegend angeordnete erste konvexe Krümmungsabschnitte 16, 17 auf. Die ersten Krümmungsabschnitte 16, 17 weisen jeweils einen ersten Krümmungsradius R16, R17 auf. Die ersten Krümmungsradien R16, R17 sind vorzugsweise gleich groß. Die ersten Krümmungsradien R16, R17 weisen erste Krümmungsmittelpunkte M16, M17 auf. Die ersten Krümmungsmittelpunkte M16, M17 liegen auf einer gemeinsamen Langseite 18 der Dichteinrichtung 10. Die Langseite 18 kann auch als Langseite der ovalen Geometrie der Dichteinrichtung 10 bezeichnet werden. Die Langseite 18 ist eine Gerade. Die Langseite 18 kann ferner auch als Hauptachse der Dichteinrichtung 10 bzw. als Hauptachse der ovalen Geometrie der Dichteinrichtung 10 bezeichnet werden. Zwischen den Krümmungsmittelpunkten M16, M17 weist die Langseite 18 eine Länge a18 auf.

Die Dichteinrichtung 10 weist weiterhin zwei einander gegenüberliegend angeordnete zweite konvexe Krümmungsabschnitte 19, 20 auf. Die ersten Krümmungsabschnitte 16, 17 und die zweiten Krümmungsabschnitte 19, 20 sind materialeinstückig miteinander verbunden. Die zweiten Krümmungsabschnitte 19, 20 weisen zweite Krümmungsradien R19, R20 mit zweiten Krümmungsmittelpunkten M19, M20 auf. Die zweiten Krümmungsradien R19, R20 sind bevorzugt gleich groß. Die zweiten Krümmungsradien R19, R20 sind größer als die ersten Krümmungsradien R16, R17. Die zweiten Krümmungsmittelpunkte M19, M20 der zweiten Krümmungsradien R19, R20 liegen auf einer gemeinsamen Kurzseite 21 der Dichteinrichtung 10. Die Kurzseite 21 kann auch als Kurzseite der ovalen Geometrie der Dichteinrichtung 10 bezeichnet werden. Die Kurzseite 21 ist eine Gerade. Die Kurzseite 21 kann ferner als Nebenachse der Dichteinrichtung 10 bzw. als Nebenachse der ovalen Geometrie der Dichteinrichtung 10 bezeichnet werden. Zwischen den Krümmungsmittelpunkte M19, M20 weist die Kurzseite 21 eine Länge a21 auf. Die Länge a18 ist größer als die Länge a21.

Die Kurzseite 21 ist senkrecht zu der Langseite 18 angeordnet. Vorzugsweise teilt die Kurzseite 21 die Langseite 18 mittig und umgekehrt. Vorzugsweise schneiden sich die Kurzseite 21 und die Langseite 18 in einem Schnittpunkt, durch welchen in der Längsrichtung LR3 betrachtet eine Mittelachse MA3 des Filterelements 3 verläuft, die vorzugsweise bei in die Filteraufnahme 2 eingebautem Filterelement 3 in Überdeckung mit einer Mittelachse MA2 (Fig. 3 und 4) der Filteraufnahme 2 liegt. Die Mittelachse MA3 ist dabei parallel zu der Längsrichtung LR3. Die ersten Krümmungsabschnitte 16, 17 sind spiegelsymmetrisch zu der Kurzseite 21 positioniert, und die zweiten Krümmungsabschnitte 19, 20 sind spiegelsymmetrisch zu der Langseite 18 positioniert. Die Dichteinrichtung 10 weist weiterhin an der Außenfläche 14 eine Außenkontur 22 auf. Die Außenkontur 22 verläuft bevorzugt nicht parallel zu einer Außenkontur 23 der ersten Endscheibe 7.

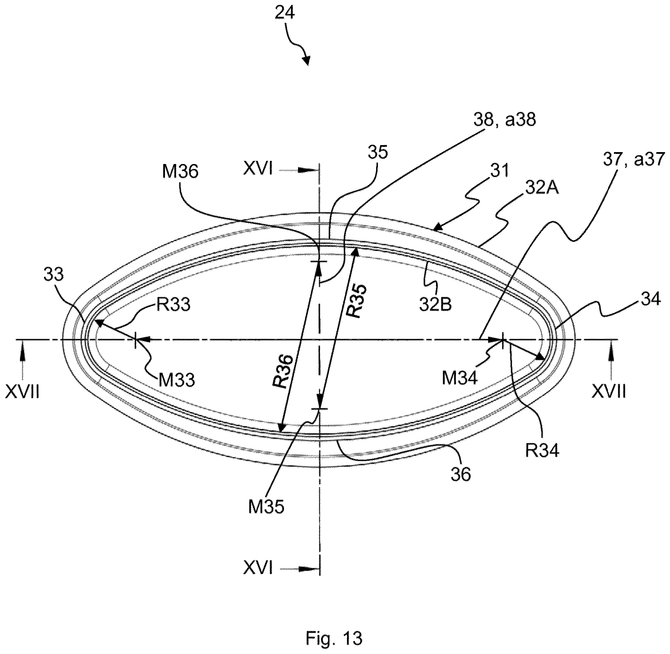

In der Filteraufnahme 2, umgeben von dem Filterelement 3, kann ein wie in Fig. 13 bis 17 gezeigtes wieteres Filterelement 24 aufgenommen sein. Das Filterelement 24 ist ein Nebenfilterelement, Nebenelement, Sekundärfilterelement oder Sekundärelement oder kann als solches bezeichnet werden. Ferner kann das Filterelement 24 auch als zweites Filterelement der Filteranordnung 1 bezeichnet werden. Derartige Sekundärfilterelemente dienen insbesondere als Sicherheit für die Fälle, in denen ein Bediener bei laufender Maschine die Filteraufnahme 2 öffnet und das Filterelement 3 entnimmt, beispielsweise zum Entstauben oder Wechseln.

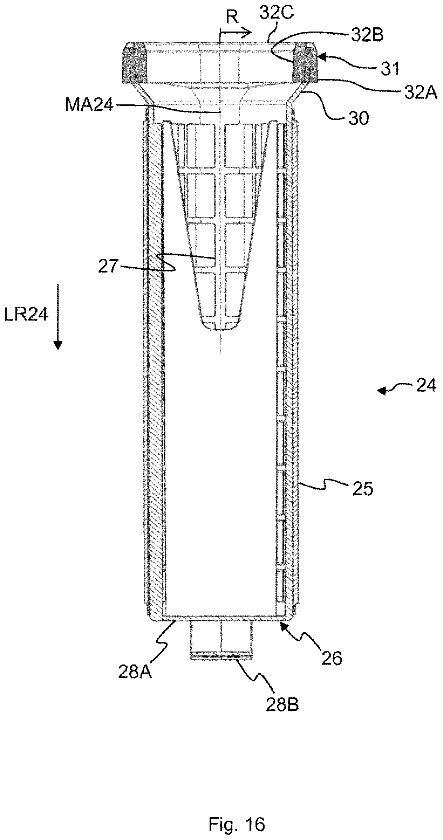

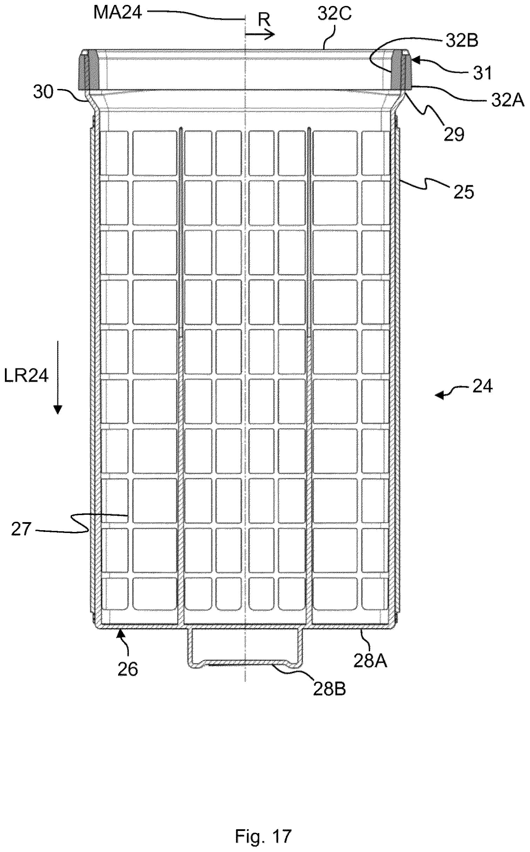

Vorzugsweise ist das Filterelement 24 in der Aufnahmeöffnung 11 des Filterelements 3 aufgenommen. Das Filterelement 24 umfasst ein Filtermedium 25 sowie ein Mittelrohr 26, das das Filtermedium 25 abstützt. Das Mittelrohr 26 ist vorzugsweise gitterförmig und damit fluiddurchlässig. Das Filtermedium 25 kann als Wickel auf das Mittelrohr 26 aufgewickelt sein oder an diesem ringförmig geschlossen, beispielsweise in Form eines sternförmig gefalteten Balgs, anliegen. Das Filtermedium 25 ist jedoch bevorzugt, wie in Fig. 16 und 17 gezeigt, glatt und damit nicht gefaltet.

Das Filtermedium 25 ist beispielsweise ein Filterpapier, ein Filtergewebe, Filtergelege oder ein Filtervlies. Insbesondere kann das Filtermedium 25 in einem Spinnvlies- oder Metlblown-Verfahren hergestellt sein oder eine derartige, auf einem Vlies- oder Zelluloseträger aufgebrachte Faserlage umfassen. Weiter kann das Filtermedium 25 verfilzt oder vernadelt sein. Das Filtermedium 25 kann Naturfasern, wie Zellulose oder Baumwolle, oder Kunstfasern, beispielsweise aus Polyester, Polyvinylsulfit oder Polytetrafluorethylen, aufweisen. Fasern des Filtermediums 25 können bei der Verarbeitung in und/oder quer oder ungeordnet zu einer Maschinenrichtung orientiert sein.

Das Mittelrohr 26 umfasst einen gitterförmigen Abstützabschnitt 27, der fluiddurchlässig ist und der das Filtermedium 25 trägt. Stirnseitig ist der Abstützabschnitt 27 mit Hilfe eines fluiddichten Bodenabschnitts 28A abgeschlossen. Der Bodenabschnitt 28A ist dabei bevorzugt materialeinstückig mit dem Abstützabschnitt 27 ausgebildet. An dem Bodenabschnitt 28A kann ein Abstützelement 28B angeformt sein. Das Abstützelement 28B kann sich im montierten Zustand des Filterelements 24 auf der zweiten Endscheibe 8 des Filterelements 3 abstützen.

Der Abstützabschnitt 27 ist im Querschnitt oval. Neben dem Abstützabschnitt 27 und dem Bodenabschnitt 28A umfasst das Mittelrohr 26 einen Dichtabschnitt 29 (Fig. 17), der im Querschnitt ebenfalls oval ist. Der Dichtabschnitt 29 ragt umlaufend um das Filterelement 24 radial über den Abstützabschnitt 27 hinaus. Unter "radial" ist vorliegend eine Richtung, insbesondere eine Radialrichtung R, senkrecht zu und von einer Mittelachse MA24 des Filterelements 24 weg zu verstehen. Die Mittelachse MA24 verläuft dabei parallel zu einer Längsrichtung LR24 des Filterelements 24.

Zwischen dem Dichtabschnitt 29 und dem Abstützabschnitt 27 ist ein Verbindungsabschnitt 30 vorgesehen. Der Verbindungsabschnitt 30 verbindet den Dichtabschnitt 29 materialeinstückig mit dem Abstützabschnitt 27. Dabei ist der Verbindungsabschnitt 30 im Querschnitt oval und verjüngt sich ausgehend von dem Dichtabschnitt 29 in Richtung des Abstützabschnitts 27 konisch. Vorzugsweise ist das Mittelrohr 26 ein einteiliges, insbesondere ein materialeinstückiges, Kunststoffspritzgussbauteil.

Das Filterelement 24 umfasst weiterhin eine Dichteinrichtung 31. Die Dichteinrichtung 31 ist elastisch verformbar. Beispielsweise ist die Dichteinrichtung 31 aus einem Polyurethanwerkstoff gefertigt. Die Dichteinrichtung 31 ist an den Dichtabschnitt 29 des Mittelrohrs 26 angeformt bzw. an diesen angegossen. Die Dichteinrichtung 31 umfasst eine um die Mittelachse MA24 umlaufende Außenfläche 32A, eine der Außenfläche 32A abgewandte umlaufende Innenfläche 32B sowie eine umlaufende Stirnfläche 32C. Die Dichteinrichtung 31 weist dabei eine ovale Geometrie bzw. einen ovalen Querschnitt auf.

Wie Fig. 13 zeigt, umfasst die Dichteinrichtung 31 zwei einander gegenüberliegende erste konvexe Krümmungsabschnitte 33, 34 sowie zwei einander gegenüberliegende zweite konvexe Krümmungsabschnitte 35, 36. Die ersten Krümmungsabschnitte 33, 34 sind materialeinstückig mit den zweiten Krümmungsabschnitten 35, 36 ausgebildet, wobei die Krümmungsabschnitte 33 bis 36 so angeordnet sind, dass zwischen den beiden ersten Krümmungsabschnitten 33, 34 die beiden zweiten Krümmungsabschnitte 35, 36 und zwischen den beiden zweiten Krümmungsabschnitten 35, 36 die beiden ersten Krümmungsabschnitte 33, 34 angeordnet sind.

Die ersten Krümmungsabschnitte 33, 34 weisen jeweils einen ersten Krümmungsradius R33, R34 auf. Die ersten Krümmungsradien R33, R34 sind vorzugsweise gleich groß. Die ersten Krümmungsradien R33, R34 weisen erste Krümmungsmittelpunkte M33, M34 auf. Die ersten Krümmungsmittelpunkte M33, M34 liegen auf einer gemeinsamen Langseite 37. Die Langseite 37 kann auch als Langseite der ovalen Geometrie der Dichteinrichtung 31 bezeichnet werden. Die Langseite 37 ist eine Gerade. Die Langseite 37 kann ferner auch als Hauptachse der Dichteinrichtung 31 bzw. als Hauptachse der ovalen Geometrie der Dichteinrichtung 31 bezeichnet werden. Zwischen den ersten Krümmungsmittelpunkte M33, M34 weist die Langseite 37 eine Länge a37 auf.

Die zweiten Krümmungsabschnitte 35, 36 weisen zweite Krümmungsradien R35, R36 auf. Die zweiten Krümmungsradien R35, R36 sind gleich groß. Zweite Krümmungsmittelpunkte M35, M36 der zweiten Krümmungsradien R35, R36 liegen auf einer gemeinsamen Kurzseite 38. Die Kurzseite 38 kann auch als Kurzseite der ovalen Geometrie der Dichteinrichtung 31 bezeichnet werden. Die Kurzseite 38 ist eine Gerade. Die Kurzseite 38 kann ferner auch als Nebenachse der Dichteinrichtung 31 bzw. als Nebenachse der ovalen Geometrie der Dichteinrichtung 31 bezeichnet werden. Zwischen den zweiten Krümmungsmittelpunkte M35, M36 weist die Kurzseite 38 eine Länge a38 auf. Die Länge a37 ist größer als die Länge a38.

Vorzugsweise teilt die Langseite 37 die Kurzseite 38 mittig und umgekehrt. Vorzugsweise schneiden sich die Kurzseite 38 und die Langseite 37 in einem Schnittpunkt, durch welchen in der Längsrichtung LR24 betrachtet die Mittelachse MA24 verläuft, die vorzugsweise bei in die Filteraufnahme 2 eingebautem Filterelement 24 in Überdeckung mit der Mittelachse MA2 der Filteraufnahme 2 sowie der Mittelachse MA3 des Filterelements 3 liegt. Die ersten Krümmungsabschnitte 33, 34 sind spiegelsymmetrisch zu der Kurzseite 38 positioniert, und die zweiten Krümmungsabschnitte 35, 36 sind spiegelsymmetrisch zu der Langseite 37 positioniert.

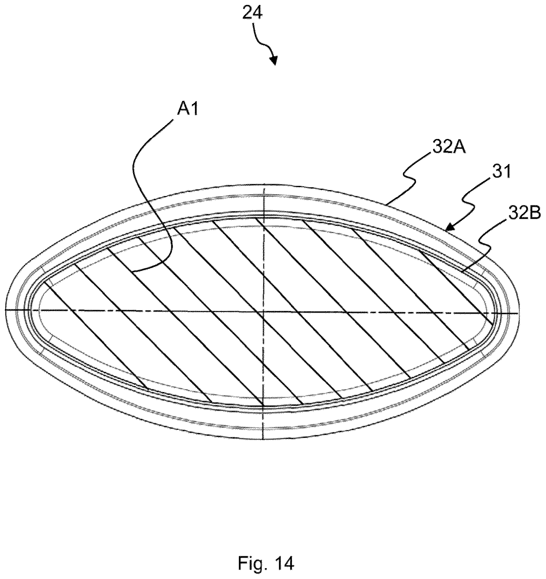

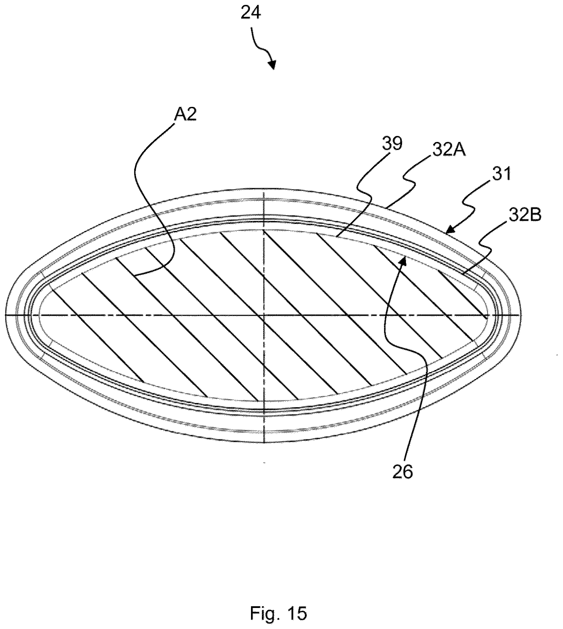

Wie Fig. 14 zeigt, begrenzt die Innenfläche 32B der Dichteinrichtung 31 eine erste Querschnittsfläche A1 des Filterelements 24. Wie Fig. 15 zeigt, begrenzt eine Innenkontur 39 des Mittelrohrs 26 eine zweite Querschnittsfläche A2 des Filterelements 24. Dabei ist die erste Querschnittsfläche A1 größer als die zweite Querschnittsfläche A2. Die zweite Querschnittsfläche A2 kann auch als Ausströmquerschnitt des Filterelements 24 bezeichnet werden. Dadurch, dass die erste Querschnittsfläche A1 größer als die zweite Querschnittsfläche A2 ist, begrenzt die Dichteinrichtung 31 nicht die zweite Querschnittsfläche A2 und somit auch nicht den Ausströmquerschnitt des Filterelements 24.

Die Dichteinrichtung 31 ragt in der Radialrichtung R betrachtet umlaufend über das Filtermedium 25 hinaus. Hierdurch können im Vergleich zu einem Filterelement ohne eine derartige herüberragende Dichteinrichtung 31 die Krümmungsradien R33 bis R36 größer gewählt werden, wodurch sich eine verbesserte Abdichtung gegenüber der Filteraufnahme 2 ergibt. Entlang der Kurzseite 38 betrachtet ragt dabei die Innenfläche 32B der Dichteinrichtung 31 radial weiter über die Innenkontur 39 des Mittelrohrs 26 hinaus als entlang der Langseite 37 betrachtet. Dementsprechend ragt auch die Außenfläche 32A der Dichteinrichtung 31 entlang der Kurzseite 38 betrachtet radial weiter über das Filtermedium 25 hinaus als entlang der Langseite 37 betrachtet.

Nun zurückkehrend zu der Filteranordnung 1 gemäß Fig. 1 bis 9. Die Filteraufnahme 2 umfasst einen Aufnahmeabschnitt 40. Der Aufnahmeabschnitt 40 kann einteilig oder mehrteilig ausgebildet sein. Der Aufnahmeabschnitt 40 ist vorzugsweise aus einem Kunststoffmaterial gefertigt. Alternativ kann der Aufnahmeabschnitt 40 aus Blech, insbesondere aus Stahlblech, gefertigt sein. Beispielsweise kann der Aufnahmeabschnitt 40 als kostengünstiges Kunststoffspritzgussbauteil ausgebildet sein. Fig. 1 bis 3 und 9 zeigen gegenüber Fig. 4 bis 8 eine unterschiedliche Ausgestaltungsmöglichkeit des Aufnahmeabschnitts 40.

Weiterhin weist die Filteraufnahme einen von dem Aufnahmeabschnitt 40 abnehmbaren Wartungsdeckel 41 auf. Über den Wartungsdeckel 41 können die Filterelemente 3, 24 aus dem Aufnahmeabschnitt 40 entnommen werden. Der Wartungsdeckel 41 kann mit Hilfe von Schnellverschlüssen 42 mit dem Aufnahmeabschnitt 40 verbunden sein. Zwischen dem Wartungsdeckel 41 und dem Aufnahmeabschnitt 40 kann eine Dichteinrichtung vorgesehen sein. Fig. 2 und 3 zeigen die Filteranordnung 1 in zwei unterschiedlichen Einbausituationen, nämlich in einer liegenden und einer stehenden.

Die Filteraufnahme 2 bzw. der Aufnahmeabschnitt 40 weist einen Fluideinlass 43 zum Einlass des zu filternden Fluids L in die Filteraufnahme 2 und einen insbesondere zentralen Fluidauslass 44 zum Auslass des mit Hilfe des Filterelements 3 gefilterten Fluids L aus der Filteraufnahme 2 auf. Der Fluideinlass 43 und der Fluidauslass 44 sind vorzugsweise rohrförmig ausgebilet. Der Fluideinlass 43 kann, wie in Fig. 1 und 3 gezeigt, einen ovalen Querschnitt aufweisen. Mit Hilfe des ovalen Querschnitts, dessen breitere Ausdehnung bevorzugt in Richtung einer Längsrichtung LR2 der Filteraufnahme 2 orientiert ist, kann im Vergleich zu einem kreisrunden Querschnitt ein geringerer Anfangsdruckverlust erreicht werden.

Das zu filternde Fluid L tritt in einer Einströmrichtung E in den Fluideinlass 43 ein. Der Fluidauslass 44 weist vorzugsweise einen kreisrunden Querschnitt auf. Das Fluid L tritt in einer Ausströmrichtung A vorzugsweise parallel zu der Längsrichtung LR3 des Filterelements 3 bzw. der Längsrichtung LR2 der Filteraufnahme 2 aus dem Fluidauslass 44 aus. Die Einströmrichtung E ist senkrecht zu der Ausströmrichtung A orientiert.

An dem Wartungsdeckel 41 kann eine Partikelaustragsöffnung 45 vorgesehen sein. Die Partikelaustragsöffnung 45 ist vorzugsweise rohrförmig. Über die Partikelaustragsöffnung 45 können aus dem Fluid L vorabgeschiedene Partikel 46 (Fig. 9) aus der Filteraufnahme 2 abgeführt werden. Die Partikelaustragsöffnung 45 kann ein Ventil 47, insbesondere ein Lippenventil oder ein sogenanntes Duckbill Valve, aufweisen. Die Partikel 46 können beispielsweise Staub, Erdreich, Sand, Pflanzenteile oder dergleichen umfassen.

In der Filteraufnahme 2 und insbesondere in dem Aufnahmeabschnitt 40 ist ein erster Eingriffsbereich 48 (Fig. 8) vorgesehen, in den die Dichteinrichtung 10 des Filterelements 3 eingreift. Dieser erste Eingriffsbereich 48 weist vorzugsweise eine Dichtungsanlagefläche 49 auf, an welcher die Dichteinrichtung 10 mit der Innenfläche 15 dichtend zur Anlage kommen kann. Im vorliegenden Ausführungsbeispiele ist, wie bevorzugt gezeigt, eine ovalzylinderförmige, radial nach außen gerichtete Dichtungsanlagefläche 49 vorgesehen, die dem Verlauf der Innenfläche 15 der Dichteinrichtung 10 folgt.

Weiterhin kann an dem Aufnahmeabschnitt 40 ein zweiter Eingriffsbereich 50 vorgesehen sein, in den die Dichteinrichtung 31 des Filterelemens 24 eingreift. Dieser zweite Eingriffsbereich 50 weist bevorzugt ebenfalls eine Dichtungsanlagefläche 51 auf, an welcher die Dichteinrichtung 31 mit ihrer Innenfläche 32B dichtend zur Anlage kommen kann. Im vorliegenden Ausführungsbeispiel ist, wie bevorzugt gezeigt, eine ovalzylinderförmige, radial nach außen gerichtete Dichtungsanlagefläche 51 vorgesehen. Die Eingriffsbereiche 48, 50 umlaufen den Fluidauslass 44 vollständig. Die Eingriffsbereiche 48, 50 weisen eine ovale Geometrie auf. Der zweite Eingriffsbereich 50 ist innerhalb des ersten Eingriffsbereichs 48 positioniert.

Wie Fig. 5 zeigt, ist der Fluideinlass 43 so angeordnet, dass die Einströmrichtung E des Fluids L in Richtung einer äußeren Mantelfläche 52 und senkrecht zu der Längsrichtung LR3 des in dem Aufnahmeabschnitt 40 angeordneten Filterelements 3 orientiert ist. Die äußere Mantelfläche 52 bildet eine Umhüllende des Filtermediums 4 des Filterelements 3. Eine zylindrische, insbesondere ovalzylindrische, Geometrie des Filterelements 3 wird gebildet durch die Endscheiben 7, 8 und die äußere Mantelfläche 52. Eine innere Mantelfläche des Filtermediums 4 ist durch das Mittelrohr 5 definiert. Das zu filternde Fluid L umströmt das in dem Aufnahmeabschnitt 40 aufgenommene Filterelement 3 so, dass an einer Wandung 53 der Filteraufnahme 2 bzw. des Aufnahmeabschnitts 40 in dem zu filternden Fluid L enthaltene Partikel 46 mit Hilfe der Fliehkraft abgeschieden werden. Der Aufnameabschnitt 40 wirkt so als Fliehkraftabscheider. Insbesondere ist die Einströmrichtung E so orientiert, dass das zu filternde Fluid L das Filterelement 3 im Wesentlichen tangential umströmt.

Der Aufnahmeabschnitt 40 weist im Querschnitt vorzugsweise eine Breitenrichtung br und eine Höhenrichtung hr auf. Ein Breiten/Höhenverhältnis br/hr beträgt vorzugsweise mindestens 4:3, weiter bevorzugt mindestens 3:2, insbesondere mindestens 2:1 und/ oder höchstens 6:1, bevorzugt höchstens 4:1, besonders bevorzugt höchstens 3:1 oder 2:1. Für die Zwecke einer optimierten Vorabscheidung sind Verhältnisse kleiner als 3:1 und bevorzugt kleiner als 2:1 oder gar kleiner als 1,5:1 vorteilhaft. Vorzugsweise ist der Fluideinlass 43 so angeordnet, dass die Einströmrichtung E senkrecht zu der Breitenrichtung br, d. h. bevorzugt senkrecht zu der Richtung der breiteren Ausdehnung des Filterelements 3, orientiert ist.

Dadurch, dass der Fluideinlass 43 bevorzugt so orientiert ist, dass das einströmende Fluid L auf eine vergleichsweise stärker gekrümmte Krümmung 54 der Wandung 53 des Aufnahmeabschnitts 40 trifft, wird das zu filternde Fluid L stark beschleunigt und umströmt das Filterelement 3 anschließend tangential und insbesondere schraubenförmig, spiralförmig oder helixförmig. Hierdurch wird eine gute Abscheidung der Partikel 46 aus dem Fluid L erreicht.

Der Fluideinlass 43 kann mit Hilfe einer Wandung 55 von dem das Filterelement 3 umströmenden Fluid L abgeschirmt sein. Die Wandung 55 unterstützt die Ausbildung einer schraubenförmigen Strömung um das Filterelement 3. Die abgeschiedenen Partikel 46 werden mit Hilfe der Partikelaustragsöffnung 45 aus dem Aufnahmeabschnitt 40 entfernt.

Der Aufnameabschnitt 40 verläuft in der Längsrichtung LR3 des Filterelements 3 parallel zu der äußeren Mantelfläche 52 des Filterelements 3, so dass, wie in Fig. 6 gezeigt, senkrecht zur Längsrichtung LR3 umlaufend um das Filterelement 3 ein gleichbleibender Abstand a zwischen Filterelement 3 und der Wandung 53 vorgesehen ist.

Fig. 9 zeigt eine Teilschnittansicht der Filteranordnung 1. Das zu filternde Fluid L strömt durch den Fluideinlass 43 in den Aufnahmeabschnitt 40 hinein. Dadurch, dass die Einströmrichtung E des zu filternden Fluids L in Richtung der äußeren Mantelfläche 52 des Filterelements 3 orientiert ist und insbesondere auch senkrecht zu der Längsrichtung LR3 positioniert ist, umströmt das zu filternde Fluid L, wie in Fig. 9 mit Hilfe eines Pfeils 56 gezeigt, das Filterelement 3 schraubenförmig und strömt durch das Filtermedium 4 des Filterelements 3 hindurch, um aus dem Fluidauslass 44 der Filteraufnahme 2 in der Ausströmrichtung A als gefiltertes Fluid L wieder abzuströmen.

Bei dem Umströmen des Filterelements 3 werden aus dem zu filternden Fluid L an der Wandung 53 des Aufnahmeabschnitts 40 mit Hilfe der Fliehkraft die Partikel 46 abgeschieden, die über die Partikelaustragsöffnung 45 aus dem Aufnahmeabschnitt 40 entnommen werden können. Die Partikel 46 können beispielsweise mit Hilfe des Ventils 47 aus der Partikelaustragsöffnung 45 ausgeschleust werden. Das Ventil 47 kann beispielsweise durch einen Lastwechsel einer an die Filteranordnung 1 angeschlossenen Brennkraftmaschine angesteuert werden. Durch die ovale Querschnittsgeometrie des Aufnahmeabschnitts 40 ergibt sich im Vergleich zu einem kreisrunden Querschnitt eine günstige Partikelabscheidung bei gleichzeitiger Eignung der Filteranordnung 1 für Bauräume mit nicht kreisrundem oder quadratischem Querschnitt.

Wie Fig. 6, 7 und 9 weiterhin zeigen, weist der Wartungsdeckel 41 einen rohrförmigen, insbesondere ovalrohrförmigen, Anströmschutz 57 auf, in dem das Filterelement 3 zumindest teilweise aufgenommen ist, bevorzugt derart, dass zwischen dem Filterelement 3 und dem Anströmschutz 57 ein Strömungspalt von einigen Millimetern entsteht. Der Anströmschutz 57 kann materialeinstückig mit dem Wartungsdeckel 41 ausgebildet sein und verhindert insbesondere, dass durch die rotierende Strömung vorabgeschiedene Partikel 46, beispielsweise durch Schwerkrafteffekte, doch noch auf dem Filtermedium 4 auftreffen.

Nach der Demontage des Wartungsdeckels 41 kann das Filterelement 3 aus dem Aufnahmeabschnitt 40 herausgezogen werden. Das Filterelement 24 verbleibt bei einem Austausch oder einer Reinigung des Filterelements 3 in dem Aufnahmeabschnitt 40 und sorgt dafür, dass die Rohseite RO und die Reinseite RL mit Hilfe des Filtermediums 25 voneinander getrennt bleiben. Dadurch, dass die Dichteinrichtung 31 in der Radialrichtung R nach außen überragt, wird ein Abströmquerschnitt des Filterelements 3 durch die Dichteinrichtung 31 nicht eingeengt. Vorzugsweise ragt die Dichteinrichtung 31 im montierten Zustand zumindest abschnittsweise, insbesondere entlang der Kurzseite 38 betrachtet, radial über eine innere Mantelfläche des Filtermediums 4 bzw. das Mittelrohr 5 des Filterelements 3, mindestens jedoch über die Innenseite der offenen Endscheibe 7, d.h. wie in der vorliegenden Ausführungsform gezeigt über die Innenseite der Aufnahmeöffnung 11, hinaus.

### Bezugszeichen

- 1: Filteranordnung
- 2: Filteraufnahme
- 3: Filterelement
- 4: Filtermedium
- 5: Mittelrohr
- 6: Fixierwickel
- 7: Endscheibe
- 8: Endscheibe
- 9: Vorderseite
- 10: Dichteinrichtung
- 11: Aufnahmeöffnung
- 12: Anströmschutz
- 13: Verspannelement
- 14: Außenfläche
- 15: Innenfläche
- 16: Krümmungsabschnitt
- 17: Krümmungsabschnitt
- 18: Langseite
- 19: Krümmungsabschnitt
- 20: Krümmungsabschnitt
- 21: Kurzseite
- 22: Außenkontur
- 23: Außenkontur
- 24: Filterelement
- 25: Filtermedium
- 26: Mittelrohr
- 27: Abstützabschnitt
- 28A: Bodenabschnitt
- 28B: Abstützelement
- 29: Dichtabschnitt
- 30: Verbindungsabschnitt
- 31: Dichteinrichtung
- 32A: Außenfläche
- 32B: Innenfläche
- 32C: Stirnfläche
- 33: Krümmungsabschnitt
- 34: Krümmungsabschnitt
- 35: Krümmungsabschnitt
- 36: Krümmungsabschnitt
- 37: Langseite
- 38: Kurzseite
- 39: Innenkontur
- 40: Aufnahmeabschnitt
- 41: Wartungsdeckel
- 42: Schnellverschluss
- 43: Fluideinlass
- 44: Fluidauslass
- 45: Partikelaustragsöffnung
- 46: Partikel
- 47: Ventil
- 48: Eingriffsbereich
- 49: Dichtungsanlagefläche
- 50: Eingriffsbereich
- 51: Dichtungsanlagefläche
- 52: Mantelfläche
- 53: Wandung
- 54: Krümmung
- 55: Wandung
- 56: Pfeil
- 57: Anströmschutz
- a: Abstand
- a18: Länge
- a21: Länge
- a37: Länge
- a38: Länge
- A: Ausströmrichtung
- A1: Querschnittsfläche
- A2: Querschnittsfläche
- b: Breite
- br: Breitenrichtung
- E: Einströmrichtung
- h: Höhe
- hr: Höhenrichtung
- L: Fluid
- LR2: Längsrichtung
- LR3: Längsrichtung
- LR24: Längsrichtung
- MA2: Mittelachse
- MA3: Mittelachse
- MA24: Mittelachse
- M16: Krümmungsmittelpunkt
- M17: Krümmungsmittelpunkt
- M19: Krümmungsmittelpunkt
- M20: Krümmungsmittelpunkt
- M33: Krümmungsmittelpunkt
- M34: Krümmungsmittelpunkt
- M35: Krümmungsmittelpunkt
- M36: Krümmungsmittelpunkt
- R: Radialrichtung
- RL: Reinseite
- RO: Rohseite
- R16: Krümmungsradius
- R17: Krümmungsradius
- R19: Krümmungsradius
- R20: Krümmungsradius
- R33: Krümmungsradius
- R34: Krümmungsradius
- R35: Krümmungsradius
- R36: Krümmungsradius

## Patentansprüche

1. Sekundärfilterelement (24) für eine Filteranordnung (1), umfassend ein Mittelrohr (26) umfassend einen gitterförmigen, fluiddurchlässigen, im Querschnitt ovalen Abstützabschnitt (27), der ein Filtermedium (25) trägt und
eine umlaufende Dichteinrichtung (31) zum Abdichten des Sekundärfilterelements (24) gegenüber einer Filteraufnahme (2) für das Sekundärfilterelement (24),
wobei die Dichteinrichtung (31) vollständig um das Sekundärfilterelement (24) umläuft; und
wobei die Dichteinrichtung (31) eine Außenfläche (32A) und eine der Außenfläche (32A) abgewandte Innenfläche (32B) umfasst; und
wobei das Sekundärelement (24) eine Radialrichtung (R) umfasst, die senkrecht zu einer Mittelachse (MA24) und von dieser weg orientiert ist; und
wobei die Mittelachse (MA24) parallel zu einer Längsrichtung (LR24) des Filterelements (24) verläuft; wobei die Dichteinrichtung (31) in der Längsrichtung (LR24) betrachtet eine ovale Geometrie mit einem Mittelpunkt und zwei sich in diesem schneidende Symmetrieachsen, nämlich eine Langseite (37) als Hauptachse und eine Kurzseite (38) als Nebenachse aufweist, und wobei die Außenfläche (32A) der Dichteinrichtung (31) entlang der Kurzseite (38) betrachtet radial weiter über das Filtermedium (25) hinausragt als entlang der Langseite (37) betrachtet, und wobei die Innenfläche (32B) der Dichteinrichtung (31) entlang der Kurzseite (38) betrachtet radial weiter über die Innenkontur (39) des Mittelrohrs (26) hinausragt als entlang der Langseite (37) betrachtet.

2. Sekundärfilterelement nach Anspruch 1, ferner umfassend ein Mittelrohr (26) zum Abstützen des Filtermediums (25), wobei die Dichteinrichtung (31) mit dem Mittelrohr (26) verbunden ist, und wobei eine von einer Innenfläche (32B) der Dichteinrichtung (31) begrenzte erste Querschnittsfläche (A1) des Sekundärfilterelements (24) größer ist als eine von einer Innenkontur (39) des Mittelrohrs (26) begrenzte zweite Querschnittsfläche (A2) des Sekundärfilterelements (24).

3. Sekundärfilterelement nach einem der vorhergehenden Ansprüche, wobei das Mittelrohr (26) einen Abstützabschnitt (27) zum Abstützen des Filtermediums (25), einen Dichtabschnitt (29), mit dem die Dichteinrichtung (31) verbunden ist, und einen zwischen dem Abstützabschnitt (27) und dem Dichtabschnitt (29) angeordneten Verbindungsabschnitt (30) aufweist, der sich ausgehend von dem Dichtabschnitt (29) in Richtung des Abstützabschnitts (27) konisch verjüngt.

4. Sekundärfilterelement nach einem der Ansprüche 1 - 3, wobei die Dichteinrichtung (31) zwei einander gegenüberliegende erste Krümmungsabschnitte (33, 34) und zwei einander gegenüberliegende zweite Krümmungsabschnitte (35, 36) aufweist, und wobei ein Krümmungsradius (R35, R36) der zweiten Krümmungsabschnitte (35, 36) größer als ein Krümmungsradius (R33, R34) der ersten Krümmungsabschnitte (33, 34) ist.

5. Sekundärfilterelement nach Anspruch 4, wobei die ersten Krümmungsabschnitte (33, 34) der Langseite (37) zugeordnet sind, wobei die zweiten Krümmungsabschnitte (35, 36) der Kurzseite (38) zugeordnet sind, und wobei die zweiten Krümmungsabschnitte (35, 36) entlang der Kurzseite (38) betrachtet radial weiter über das Filtermedium (4) hinausragen als die ersten Krümmungsabschnitte (33, 34) entlang der Langseite (37) betrachtet.

6. Filteranordnung (1) mit einer Filteraufnahme (2), einem in der Filteraufnahme (2) aufgenommenen Hauptfilterelement (3), das ein Filtermedium (4) und eine umlaufende Dichteinrichtung (10) zum Abdichten des Hauptfilterelements (3) gegenüber der Filteraufnahme (2) aufweist, und einem in dem Hauptfilterelement (3) aufgenommenen Sekundärfilterelement (24) nach einem der Ansprüche 1 - 5, das eine Dichteinrichtung (31) zum Abdichten des Sekundärfilterelements (24) gegenüber der Filteraufnahme (2) aufweist, wobei die Dichteinrichtung (31) des Sekundärfilterelements (24) radial über den Innenraum des Hauptfilterelements (3) hinausragt.

7. Filteranordnung nach Anspruch 6, wobei die Dichteinrichtung (31) des Sekundärfilterelements (24) eine ovale Geometrie mit einer Langseite (37) und einer Kurzseite (38) aufweist, und wobei eine Außenfläche (32A) der Dichteinrichtung (31) des Sekundärfilterelements (24) entlang der Kurzseite (38) betrachtet radial weiter über das Filtermedium (4) des Hauptfilterelements (3) hinausragt als entlang der Langseite (37) betrachtet.

8. Filteranordnung nach Anspruch 6 oder 7, wobei die Dichteinrichtung (31) des Sekundärfilterelements (24) vollständig außerhalb des Filtermediums (4) des Hauptfilterelements (3) angeordnet ist.

9. Filteranordnung nach einem der Ansprüche 6 - 8, wobei die Dichteinrichtung (10) des Hauptfilterelements (3) und die Dichteinrichtung (31) des Sekundärfilterelements (24) radial gegenüber der Filteraufnahme (2) abdichten, und wobei die Dichteinrichtung (31) des Sekundärfilterelements (24) zumindest abschnittsweise innerhalb der Dichteinrichtung (10) des Hauptfilterelements (3) angeordnet ist.

10. Filteranordnung nach einem der Ansprüche 6 - 9, wobei die Dichteinrichtung (10) des Hauptfilterelements (3) und die Dichteinrichtung (31) des Sekundärfilterelements (24) parallel zueinander verlaufen.

## Claims

1. A secondary filter element (24) for a filter assembly (1), comprising a central tube (26) comprising a grid-shaped, fluid-permeable, oval-shaped cross-sectional support section (27) that carries a filter medium (25) and
a circumferential sealing means (31) for sealing the secondary filter element (24) with respect to a filter seat (2) for the secondary filter element (24),
wherein the sealing means (31) completely surrounds the secondary filter element (24); and
wherein the sealing means (31) comprises an outer surface (32A) and an inner surface (32B) opposing the outer surface (32A); and
wherein the secondary element (24) comprises a radial direction (R) perpendicular to a central axis (MA24) and oriented away from it; and
wherein the central axis (MA24) extends parallel to a longitudinal direction (LR24) of the filter element (24);
wherein the sealing means (31), when viewed in the longitudinal direction (LR24), features an oval geometry having a center point and two symmetry axes intersecting therein, in particular a long side (37) as the principal axis and a short side (38) as the secondary axis, and wherein the outer surface (32A) of the sealing means (31), when viewed along the short side (38), projects radially further beyond the filter medium (25) than when viewed along the long side (37), and wherein the inner surface (32B) of the sealing means (31), when viewed along the short side (38), projects radially further beyond the inner contour (39) of the central tube (26) than when viewed along the long side (37).

2. The secondary filter element according to claim 1, furthermore comprising a central tube (26) for supporting the filter medium (25), wherein the sealing means (31) is connected to the central tube (26), and wherein a first cross-sectional area (A1) of the secondary filter element (24) delimited by an inner surface (32B) of the sealing means (31) is larger than a second cross-sectional area (A2) of the secondary filter element (24) delimited by an inner contour (39) of the central tube (26).

3. The secondary filter element according to one of the preceding claims, wherein the central tube (26) features a support section (27) for supporting the filter medium (25), a sealing section (29) to which the sealing means (31) is connected, and a connecting section (30) disposed between the support section (27) and the sealing section (29), said connecting section tapering conically from the sealing section (29) towards the support section (27).

4. The secondary filter element according to one of the claims 1 to 3, wherein the sealing means (31) features two mutually opposing first curvature sections (33, 34) and two mutually opposing second curvature sections (35, 36), and wherein a radius of curvature (R35, R36) of the second curvature sections (35, 36) is larger than a radius of curvature (R33, R34) of the first curvature sections (33, 34).

5. The secondary filter element according to claim 4, wherein the first curvature sections (33, 34) are allocated to the long side (37), wherein the second curvature sections (35, 36) are allocated to the short side (38), and wherein the second curvature sections (35, 36) project radially further beyond the filter medium (4) when viewed along the short side (38) than the first curvature sections (33, 34) when viewed along the long side (37).

6. A filter assembly (1) having a filter seat (2), a main filter element (3) accommodated in the filter seat (2), said main filter element featuring a filter medium (4) and a circumferential sealing means (10) for sealing the main filter element (3) with respect to the filter seat (2), and a secondary filter element (24) accommodated in the main filter element (3) according to one of the claims 1 to 5, said secondary filter element featuring a sealing means (31) for sealing the secondary filter element (24) with respect to the filter seat (2), wherein the sealing means (31) of the secondary filter element (24) projects radially beyond the interior space of the main filter element (3).

7. The filter assembly according to claim 6, wherein the sealing means (31) of the secondary filter element (24) features an oval geometry having a long side (37) and a short side (38), and wherein an outer surface (32A) of the sealing means (31) of the secondary filter element (24), when viewed along the short side (38), projects radially further beyond the filter medium (4) of the main filter element (3) than when viewed along the long side (37).

8. The filter assembly according to claim 6 or 7, wherein the sealing means (31) of the secondary filter element (24) is disposed completely outside the filter medium (4) of the main filter element (3).

9. The filter assembly according to one of the claims 6 to 8, wherein the sealing means (10) of the main filter element (3) and the sealing means (31) of the secondary filter element (24) radially seal with respect to the filter seat (2), and wherein the sealing means (31) of the secondary filter element (24) is disposed at least section-wise inside the sealing means (10) of the main filter element (3).

10. The filter assembly according to one of the claims 6 to 9, wherein the sealing means (10) of the main filter element (3) and the sealing means (31) of the secondary filter element (24) extend parallel to each other.

## Revendications

1. Élément filtrant secondaire (24) pour un ensemble de filtre (1), comprenant un tube central (26) comprenant une section de support (27) en forme de grille, perméable aux fluides, de section ovale, qui porte un milieu filtrant (25) et
un dispositif d'étanchéité circonférentiel (31) pour étancher l'élément filtrant secondaire (24) par rapport à un logement de filtre (2) pour l'élément filtrant secondaire (24),
dans lequel le dispositif d'étanchéité (31) entoure complètement l'élément filtrant secondaire (24); et
dans lequel le dispositif d'étanchéité (31) comprend une surface extérieure (32A) et une surface intérieure (32B) opposée à la surface extérieure (32A); et dans lequel l'élément secondaire (24) comprend une direction radiale (R) orientée perpendiculairement à un axe médian (MA24) et s'éloignant de celui-ci; et
dans lequel l'axe médian (MA24) s'étend parallèlement à une direction longitudinale (LR24) de l'élément filtrant (24);
dans lequel le dispositif d'étanchéité (31), vu dans la direction longitudinale (LR24), présente une géométrie ovale ayant un centre et deux axes de symétrie se coupant dans celui-ci, plus précisément un côté long (37) comme axe principal et un côté court (38) comme axe auxiliaire, et dans lequel la surface extérieure (32A) du dispositif d'étanchéité (31), vue le long du côté court (38), s'étend radialement plus loin au-delà du milieu filtrant (25) que lorsqu'elle est vue le long du côté long (37), et dans lequel la surface intérieure (32B) du dispositif d'étanchéité (31), vue le long du côté court (38), dépasse radialement plus loin le contour intérieur (39) du tube central (26) que lorsqu'elle est vue le long du côté long (37).

2. Elément filtrant secondaire selon la revendication 1, comprenant en outre un tube central (26) pour supporter le milieu filtrant (25), dans lequel le dispositif d'étanchéité (31) est relié au tube central (26), et dans lequel une première surface de section transversale (A1) de l'élément filtrant secondaire (24), délimitée par une surface intérieure (32B) du dispositif d'étanchéité (31), est supérieure à une seconde surface de section transversale (A2) de l'élément filtrant secondaire (24), délimitée par un contour intérieur (39) du tube central (26).

3. Elément filtrant secondaire selon l'une quelconque des revendications précédentes, dans lequel le tube central (26) présente une section de support (27) pour supporter le milieu filtrant (25), une section d'étanchéité (29) à laquelle est relié le dispositif d'étanchéité (31), et une section de raccordement (30) disposée entre la section de support (27) et la section d'étanchéité (29), ladite section de raccordement se rétrécissant de manière conique à partir de la section d'étanchéité (29) en direction de la section de support (27).

4. Elément filtrant secondaire selon l'une quelconque des revendications 1 à 3, dans lequel le dispositif d'étanchéité (31) présente deux premières sections courbées opposées (33, 34) et deux secondes sections courbées opposées (35, 36), et dans lequel un rayon de courbure (R35, R36) des secondes sections courbées (35, 36) est supérieur à un rayon de courbure (R33, R34) des premières sections courbées (33, 34).

5. Elément filtrant secondaire selon la revendication 4, dans lequel les premières sections courbées (33, 34) sont attribuées au côté long (37), dans lequel les secondes sections courbées (35, 36) sont attribuées au côté court (38), et dans lequel les secondes sections courbées (35, 36), vues le long du côté court (38), dépassent radialement plus loin au-delà du milieu filtrant (4) que les premières sections courbées (33, 34), vues le long du côté long (37).

6. Ensemble de filtre (1) ayant un logement de filtre (2), un élément filtrant principal (3) logé dans le logement de filtre (2), ledit élément filtrant principal présentant un milieu filtrant (4) et un dispositif d'étanchéité circonférentiel (10) pour étancher l'élément filtrant principal (3) par rapport au logement de filtre (2), et un élément filtrant secondaire (24) selon l'une quelconque des revendications 1 à 5, logé dans l'élément filtrant principal (3), ledit élément filtrant secondaire présentant un dispositif d'étanchéité (31) pour étancher l'élément filtrant secondaire (24) par rapport au logement de filtre (2), dans lequel le dispositif d'étanchéité (31) de l'élément filtrant secondaire (24) fait saillie radialement au-delà de l'espace intérieur de l'élément filtrant principal (3).

7. Ensemble de filtre selon la revendication 6, dans lequel le dispositif d'étanchéité (31) de l'élément filtrant secondaire (24) présente une géométrie ovale ayant un côté long (37) et un côté court (38), et dans lequel une surface extérieure (32A) du dispositif d'étanchéité (31) de l'élément filtrant secondaire (24), vue le long du côté court (38), fait saillie radialement plus loin au-delà du milieu filtrant (4) de l'élément filtrant principal (3), que vue le long du côté long (37).

8. Ensemble de filtre selon la revendication 6 ou 7, dans lequel le dispositif d'étanchéité (31) de l'élément filtrant secondaire (24) est entièrement disposé à l'extérieur du milieu filtrant (4) de l'élément filtrant principal (3).

9. Ensemble de filtre selon l'une quelconque des revendications 6 à 8, dans lequel le dispositif d'étanchéité (10) de l'élément filtrant principal (3) et le dispositif d'étanchéité (31) de l'élément filtrant secondaire (24) étanchent radialement par rapport au logement de filtre (2), et dans lequel le dispositif d'étanchéité (31) de l'élément filtrant secondaire (24) est disposé au moins par sections à l'intérieur du dispositif d'étanchéité (10) de l'élément filtrant principal (3).

10. Ensemble de filtre selon l'une quelconque des revendications 6 à 9, dans lequel le dispositif d'étanchéité (10) de l'élément filtrant principal (3) et le dispositif d'étanchéité (31) de l'élément filtrant secondaire (24) s'étendent parallèlement l'un à l'autre.
